# EUROPEAN PATENT APPLICATION

(11) **EP 2 360 689 A1**
(43) Date of publication of application: **24.08.2011**
(21) Application number: 10305146.2
(22) Date of filing: 15.02.2010
(51) Int. Cl.: G11B 7/0045

(54) **Write strategy and method for writing to a compatible optical recording medium**

(71) Applicant: Thomson Licensing, 92130 Issy-les-Moulineaux (FR)
(72) Inventor: Kimmelmann, Stefan, 78052, Villingen-Pfaffenweiler (DE); Khrushchev, Sergey, 78089, Unterkirnach (DE); Krause, Michael, 78050, Villingen-Schwenningen (DE)
(74) Representative: Schmidt-Uhlig, Thomas

(57) **Abstract**

Write strategy and method for writing to a compatible optical recording medium

The present invention relates to a write strategy and a method for writing to a compatible optical recording medium (10), which results in a recorded optical recording medium (10) having the appearance of a read-only optical recording medium for most players and recorders. The invention further relates to an apparatus (1) for writing to a compatible recordable optical recording medium (10), which makes use of the write strategy. According to the invention, the write strategy has a high-power pulse (20) at the beginning of a rectangular block-pulse (21), wherein the high-power pulse (20) is adapted to cause a local melting of a substrate (85) of the compatible optical recording medium (10).

## Description

The present invention relates to a write strategy and a method for writing to a compatible optical recording medium, which results in a recorded optical recording medium having the appearance of a read-only optical recording medium for most players and recorders. The invention further relates to an apparatus for writing to a compatible recordable optical recording medium, which makes use of the write strategy.

The distribution of digital data such as movies or software on optical recording media today is established as the main distribution channel. However, this means that stores need to stock a large amount of titles in order to be able to provide most requested titles immediately to their customers without having to order them.

In order to reduce this need for a large stock several solutions for a manufacturing on demand or a distribution via networks have been proposed. The optical recording medium, typically a DVD (digital versatile disk), is recorded as soon as a title is requested by a customer. Recording is done with a special recorder provided in a store, with a kiosk type recording terminal, or by a special consumer recorder connected to a network. These special recorders allow to write data to a recordable DVD in such a way that the DVD has the appearance of a CSS-encrypted DVD-Video (ROM) disk, even though it is a specially finalized recordable DVD. For recording the optical recording medium has a groove structure to guide an optical pickup unit relative to the optical recording medium.

Apart from the above mentioned manufacturing on demand applications, there also exist a plurality of applications for pre-recorded optical recording media having at least some recording capabilities. For example, for serialization and authentication of pre-recorded optical recording media a recordable area is needed on pre-recorded optical recording media. The recordable area is used for adding a unique identifier to the pre-recorded medium after the stamping process at the manufacturing plant. Similarly, information stored on the pre-recorded medium can be used to replace a required software key, such as a serial number, which otherwise has to be input manually with a keyboard when installing the software. The information may also be used as an authentication key to unlock the content stored on the pre-recorded medium.

A further application of recordable areas on a pre-recorded medium is related to the so-called retail activation. According to this application an optical recording medium cannot be played back after manufacturing, e.g. because specific parts of the content are missing. Instead, the medium needs to be activated at the point of sale using a special recorder for making the necessary modifications to the medium, e.g. by adding the missing content.

In order to establish the above described solutions as further distribution channels, the recorded optical recording media have to be compatible with as many standard players and recorders as possible. While this is usually not a problem for players, the situation is different with recorders.

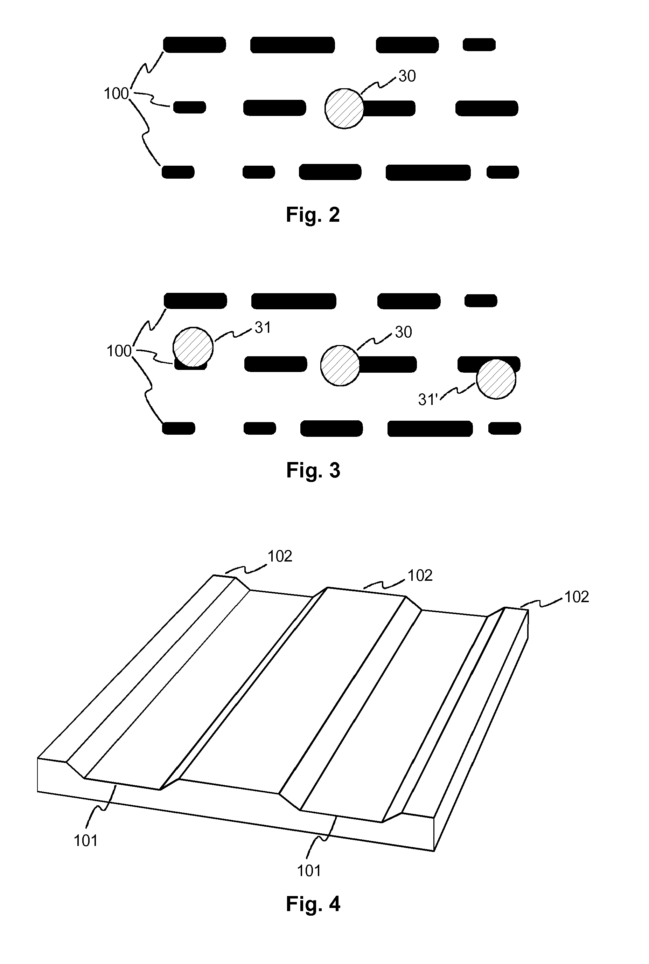

Several methods are known for detecting the position of the light spot on an optical recording medium. The two most popular are Differential-Phase-Detection (DPD, used for read-only (ROM) formats) and radial Push-Pull (used for recordable (RE) formats). However, those two methods require substrates having embossed features, i.e. pits for ROM formats or a land/groove structure for RE formats. A typical land/groove structure is depicted in Fig. 4. As a copy protection mechanism some optical pickups used in recorders do not allow to retrieve data from an optical recording medium indicated as a read-only medium when a push-pull signal originating from the land/groove structure is found, which is an indication of a recordable optical recording medium. Such incompatibilities have to be avoided.

In EP 1 933 313 a recordable optical recording medium with a specially designed land/groove structure is disclosed. The optical recording medium is recorded using a laser with a wavelength around 405nm, whereas it is read using a laser with a wavelength around 650nm. The specially designed land/groove structure allows to have a push-pull signal at 405nm, but to have only a strongly reduced push-pull signal at 650nm.

In order to fulfill the DVD-ROM specification when using the solution proposed in the above document, a new material needs to be used, which has a high absorption in the blue wavelength range and a high reflectivity in the red wavelength range. Also, a light source emitting a light beam in the blue wavelength range is necessary for recording. This means that the recording medium essentially needs to fulfill the tighter specifications regarding tilt, cover layer thickness, refractive index, etc., which are applicable to high data density recording media intended to be read with a light beam in the blue wavelength range. Finally, the recorded pit structure shows different properties in the blue wavelength range and in the red wavelength range. Therefore, the recorded medium needs to be checked after recording using a light beam in the red wavelength range.

A suitable material has been proposed in European Patent Application EP09305537.4. In this document an optical recording medium with a recording layer having an active layer composed of Pd, O, Te, and Cu is described. A suitable composition of the active layer was determined to be Pd₈O₆₀Te₂₇Cu₅. With this composition a good compatibility with ROM optical recording media was demonstrated in terms of:
- Reflectivity (>45%)
- Modulation (>60%)
- Jitter (<8%)
- Push-pull amplitude (<10%)

However, in a practical system it remains difficult to exceed the 60% threshold for the modulation and to ensure a jitter of less than 8% with the above active layer.

It is an object of the invention to propose a write strategy and a method for writing to a compatible optical recording medium, which results in a recorded optical recording medium having the appearance of a read-only optical recording medium for most players and recorders. It is a further object of the invention to propose an apparatus for writing to a compatible optical recording medium, which makes use of the proposed write strategy.

According to the invention, a write strategy for writing to a compatible optical recording medium has a high-power pulse at the beginning of a rectangular block-pulse, wherein the high-power pulse is adapted to cause a local melting of a substrate of the compatible optical recording medium.

The main difference of the write-strategy according to the invention in comparison with well-known write-strategies is the extremely high-power pulse in front of the rectangular block-pulse. The high-power pulse induces a local melting of the substrate of the optical recording medium. Typically, the substrate is a polycarbonate substrate. The subsequent long rectangular pulse pulls the melting area along the track. During cooling down the polycarbonate shrinks and forms pits or holes within the polycarbonate. These modifications of the polycarbonate substrate cause an additional modulation on top of the normal modulation resulting from the physical changes of the recording layer stack. The write-strategy thus makes it possible to increase the modulation.

Furthermore, the structure of pits in the polycarbonate has the effect of an additional groove with its own grating pitch. This additional groove has the optical effect that the effective grating pitch is doubled. Therefore, the push-pull signal after recording is reduced to a large extent. This leads to an improved playability of the recorded optical recording medium, because at the reading wavelength of 650nm there is no difference between the push-pull signal of a ROM optical recording medium and the recorded compatible optical recording medium. This fact allows to relax the tough specifications for the push-pull signal at the wavelength of 405nm before recording, and to increase the compatibility with currently available DVD-players and recorders to close to 100%.

Similarly, a method for writing to a compatible optical recording medium has the steps of:
- modulating a light beam in accordance with a write strategy, which has a high-power pulse at the beginning of a rectangular block-pulse, wherein the high-power pulse is adapted to cause a local melting of a substrate of the compatible optical recording medium; and
- illuminating an active layer of the compatible optical recording medium with the modulated light beam.

In order to implement the above writing method, an apparatus for writing to a compatible optical recording medium has:
- a light source for generating a light beam;
- a laser driver for modulating the light beam in accordance with a write strategy, which has a high-power pulse at the beginning of a rectangular block-pulse, wherein the high-power pulse is adapted to cause a local melting of a substrate of the compatible optical recording medium; and
- an objective lens for focusing the modulated light beam onto an active layer of the optical recording medium.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically shows a pickup for reading from and/or writing to an optical recording medium;
- Fig. 2: depicts the principle of differential phase detection tracking on a pre-recorded optical recording medium;
- Fig. 3: depicts the principle of three-beam tracking on a pre-recorded optical recording medium;
- Fig. 4: shows a land/groove structure of a known recordable optical recording medium;
- Fig. 5: schematically depicts a write strategy according to the invention;
- Fig. 6: shows a photograph of the polycarbonate substrate before and after recording;
- Fig. 7: depicts a push-pull signal before and after recording;
- Fig. 8: shows a photograph of recorded holes in the polycarbonate substrate;
- Fig. 9: depicts a depth profile of a recorded hole in the polycarbonate substrate; and

- Fig. 10: shows the layer stack of a compatible optical recording medium.

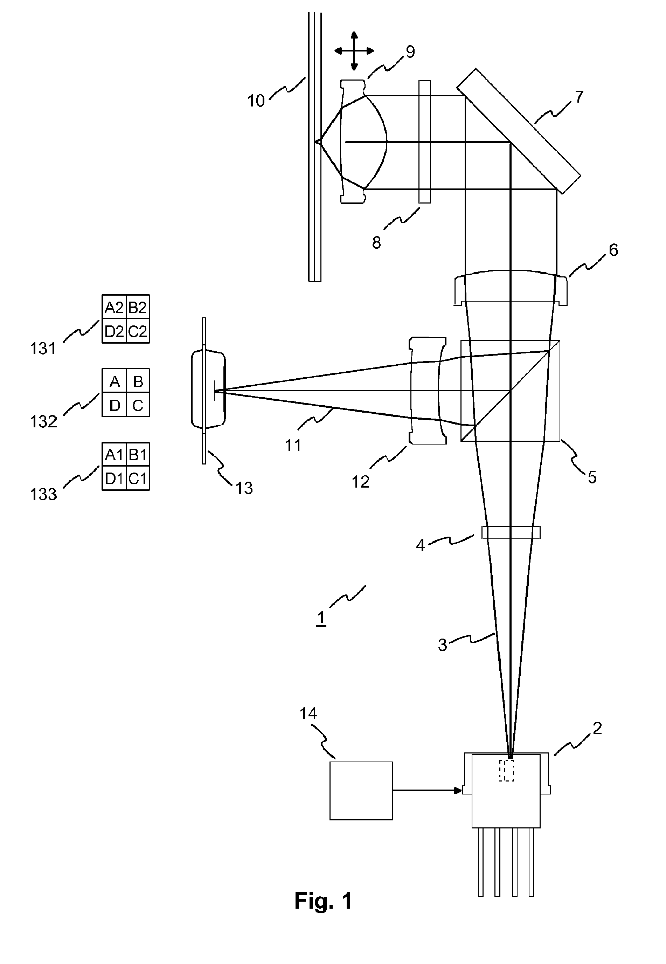

In Fig. 1 a pickup 1 for reading from and /or writing to an optical recording medium 10 is shown schematically. A laser diode 2 emits a linearly polarized light beam 3, which passes through a diffraction grating 4. For writing the laser diode 2 is modulated by a laser driver 14 in accordance with a write strategy. The diffraction grating 4 generates two first order side beams (not shown) in addition to the zeroth order main light beam 3. The side beams are used for three-beam tracking. The main light beam 3 and the side beams light beams pass through a polarization beam splitter cube 5 and are collimated by a collimator lens 6. A mirror 7 directs the collimated light beams towards a quarter wave plate 8, which transforms the light beams 3 into circular polarized light beams. An objective lens 9 finally focuses the light beams onto an optical recording medium 10. The light beams 11 reflected by the optical recording medium 10 are collimated by the objective lens 9 and pass through the quarter wave plate 8, which transforms the reflected light beams 11 into linear polarized light beam 11. Due to the quarter wave plate 8, the direction of polarization of the reflected light beams 11 is perpendicular to the direction of polarization of the initial light beams. The reflected light beams 11 are thus deflected by the polarization beam splitter cube 5 towards a focusing lens 12, which focuses the reflected light beam 11 onto a detector 13. The detector 13 has a plurality of detection areas 131, 132, 133 for generating tracking and focus error signals in addition to a data signal.

Fig. 2 shows a typical structure of a pre-recorded optical recording medium. As can be seen, the pre-recorded optical recording medium has a plurality of data tracks 100 formed by pre-recorded pits. For such a structure usually the so called differential phase detection (DPD) tracking method is used. A single light spot 30 scanning one of the tracks 100 is needed for this purpose.

In contrast, the three-beam tracking method makes use of three light spots 30, 31, 31' falling onto three adjacent tracks. This is illustrated schematically in Fig. 3. A main light beam 30 is located on a track 100. Two side beams 31, 31' are arranged shifted with respect to the main light beam 30 such that they only fall partly on the track 100 scanned by the main light beam 30. The reflected side beams 31, 31' are detected by separate detector elements of the photo detector 13. As the reflectivity of the tracks 100 is different from the reflectivity of the areas between the tracks 100, any displacement of the side beams 31, 31' relative to the track 100 manifests itself as a change of the intensity detected by the separate detector elements of the photo detector 13. This change of intensity is used for tracking.

In case of recordable optical recording media, no pre-recorded pits are present. In order to enable tracking, a land/groove structure is usually provided in the recording layer. Fig. 4 shows such a land/groove structure of a known recordable optical recording medium 10. As can be seen, a plurality of grooves 101 are arranged between the lands 102.

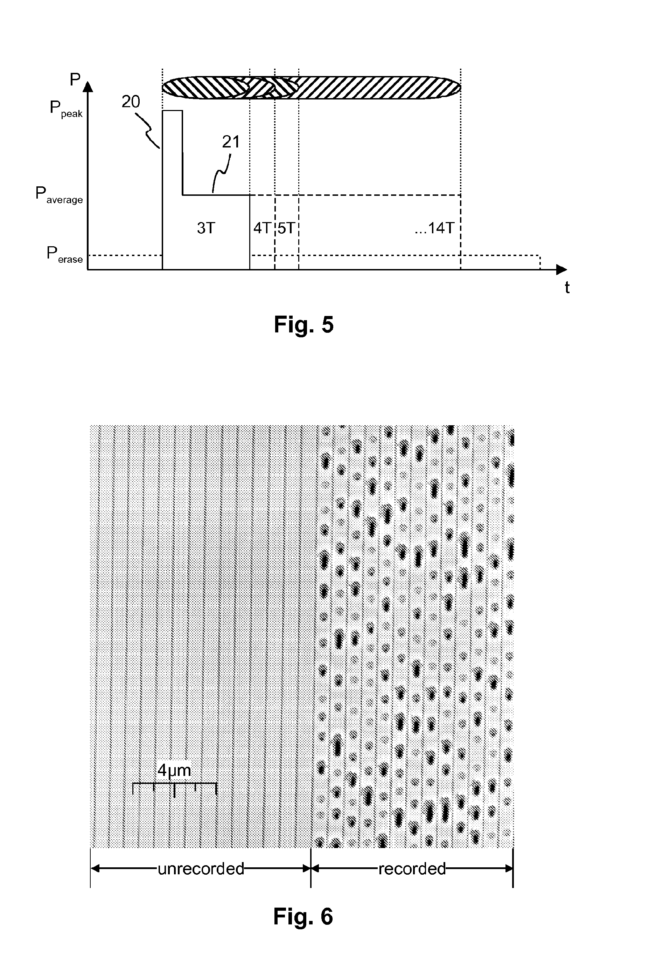

A write strategy according to the invention is schematically depicted in Fig. 5. The main difference of this write-strategy in comparison with well-known write-strategies is the extremely high-power pulse with the peak power Pₚₑₐₖ in front of the rectangular block-pulse with the power P_{averages}. The high-power pulse induces a local melting of the polycarbonate substrate of the optical recording medium. The subsequent long rectangular pulse pulls the melting area along the track. During cooling down the polycarbonate shrinks and forms pits within the polycarbonate. These modifications of the polycarbonate substrate cause an additional modulation on top of the normal modulation resulting from the physical changes of the recording layer stack. The write-strategy thus makes it possible to increase the modulation.

A photograph of the polycarbonate substrate before and after recording is shown in Fig. 6. For this photograph the recording layer stack was removed. As can be seen, after recording the substrate exhibits a plurality of pits or holes, which are caused by the local melting of the polycarbonate substrate due to the high-power pulses.

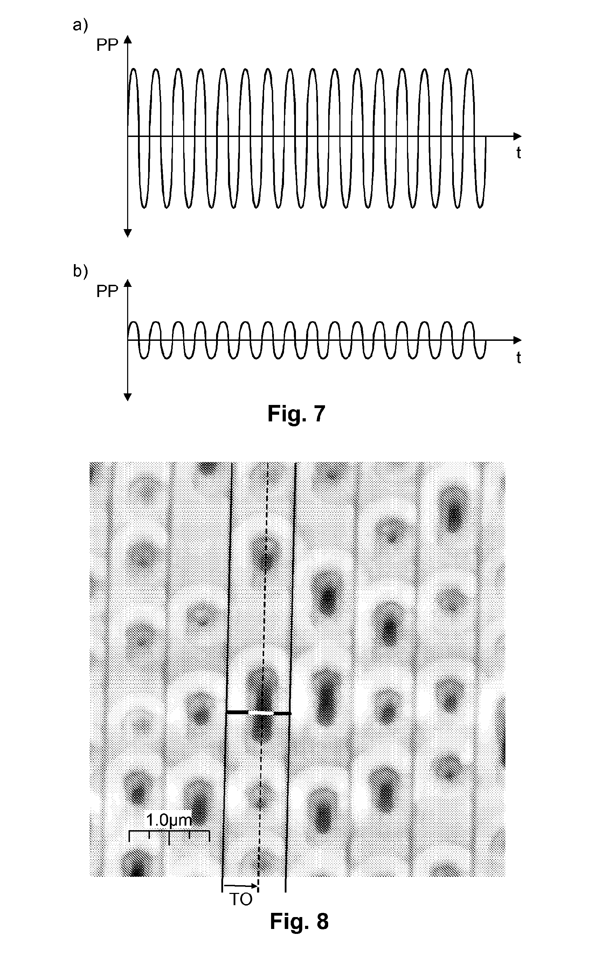

The structure of pits in the polycarbonate has the effect of an additional groove with its own grating pitch. This additional groove has the optical effect that the effective grating pitch is doubled. Therefore, the push-pull signal after recording is reduced to a large extent for both wavelengths, i.e. for 650nm and for 405nm. This can clearly be seen from Fig. 7, which depicts the push-pull signal at a wavelength of 405nm before (Fig. 7a)) and after recording (Fig. 7b)). This leads to an improved playability of the recorded optical recording medium, because at the wavelength of 650nm there is no difference between the push-pull signal of a ROM optical recording medium and the recorded compatible optical recording medium.

An enlarged photograph of a recorded hole in the polycarbonate substrate is shown in Fig. 8. The pits should not be wider as a land and should be well centred to the middle line of the land, which is indicated by the dashed line. If the pit train is not well centred, i.e. if the pit train has a tracking offset TO, then the pits interfere with the grooves. This causes higher jitter and push-pull values.

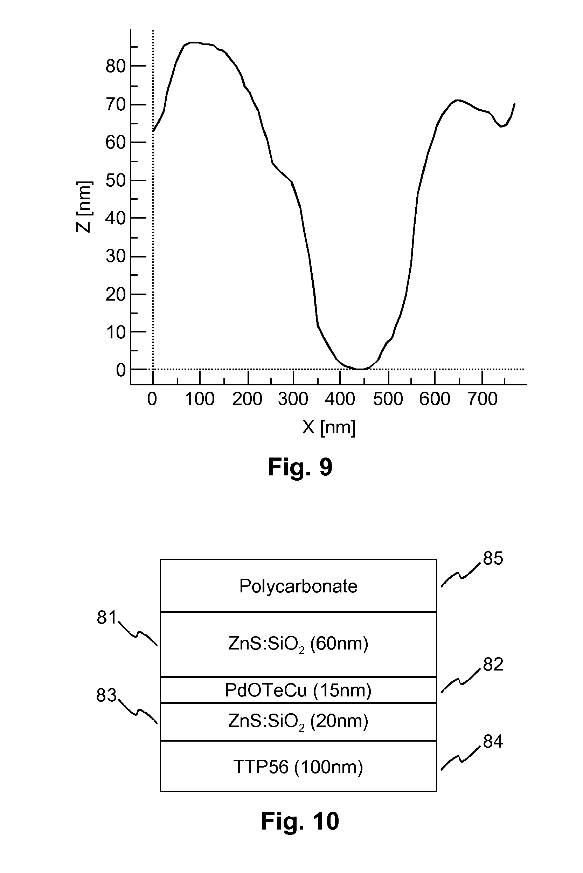

Fig. 9 depicts a depth profile of a recorded hole in the polycarbonate substrate. The depth profile was measured along the bold black line of Fig. 8. The holes have a depth of around 80nm compared to a groove depth of around 25nm.

The layer stack of a compatible optical recording medium 10 is depicted in Fig. 10. The layer stack has four layers 81, 82, 83, 84 arranged on a polycarbonate substrate 85, namely a first ZnS:SiO₂ dielectric layer 81, a 15nm PdOTeCu active layer 82, a second ZnS:SiO₂ dielectric layer 83, and a 100nm layer 84 made of the Ag alloy TTP56. The thicknesses of the dielectric layers 81 and 83 are chosen such that the reflectivity at 405nm is minimum, in order to reduce the writing power, while the reflectivity at 650nm is above the value required by the specification. An optimal trade-off is a thickness of around 60nm for the first dielectric layer 81 and a thickness of around 20nm for the second dielectric layer 83.

## Claims

1. Write strategy for writing to a compatible optical recording medium (10), **characterized in that** the write strategy has a high-power pulse (20) at the beginning of a rectangular block-pulse (21), wherein the high-power pulse (20) is adapted to cause a local melting of a substrate (85) of the compatible optical recording medium (10).

2. Write strategy according to claim 1, **wherein** the high-power pulse (20) is adapted to cause a local melting of a polycarbonate substrate (85).

3. Write strategy according to claim 1 or 2, **wherein** the high-power pulse (20) is adapted to form holes in the substrate (85).

4. Write strategy according to one of claims 1 to 3, **wherein** the write strategy is adapted to a recording wavelength of 405nm.

5. Method for writing to a compatible optical recording medium (10), **having** the steps of:
- modulating a light beam (3) in accordance with a write strategy, which has a high-power pulse (20) at the beginning of a rectangular block-pulse (21), wherein the high-power pulse (20) is adapted to cause a local melting of a substrate (85) of the compatible optical recording medium (10); and
- illuminating an active layer (82) of the compatible optical recording medium (10) with the modulated light beam (3).

6. Method according to claim 5, **wherein** the high-power pulse (20) is adapted to cause a local melting of a polycarbonate substrate (85).

7. Method according to claim 5 or 6, **wherein** the high-power pulse (20) is adapted to form holes in the substrate (85).

8. Method according to one of claims 5 to 7, **wherein** the light beam (3) has a wavelength of 405nm.

9. Apparatus (1) for writing to a compatible optical recording medium (10), **having:**
- a light source (2) for generating a light beam;
- a laser driver (14) for modulating the light beam (3) in accordance with a write strategy, which has a high-power pulse (20) at the beginning of a rectangular block-pulse (21), wherein the high-power pulse (20) is adapted to cause a local melting of a substrate (85) of the compatible optical recording medium (10); and
- an objective lens (9) for focusing the modulated light beam (3) onto an active layer (82) of the compatible optical recording medium (10).

10. Apparatus (1) according to claim 9, **wherein** the high-power pulse (20) is adapted to cause a local melting of a polycarbonate substrate (85).

11. Apparatus (1) according to claim 9 or 10, **wherein** the high-power pulse (20) is adapted to form holes in the substrate (85).

12. Apparatus (1) according to one of claims 9 to 11, **wherein** the light beam (3) has a wavelength of 405nm.
